# FASCICULE DE BREVET EUROPEEN

(11) **EP 3 005 051 B1**
(45) Date de publication et mention de la délivrance du brevet: **26.04.2017**
(21) Numéro de dépôt: 14731743.2
(22) Date de dépôt: 28.05.2014
(51) Int. Cl.: G06F 3/044, G06F 3/0354

(54) **DISPOSITIF MANUEL COMPRENANT UN EMBOUT INVERSABLE POUR ÉCRAN CAPACITIF**
MANUELLE VORRICHTUNG MIT EINEM UMKEHRBAREN ENDSTÜCK FÜR EINEN KAPAZITIVEN SCHIRM
MANUAL DEVICE COMPRISING AN INVERTIBLE END PIECE FOR A CAPACITIVE SCREEN

(30) Priorité: 29.05.2013 FR 1354874
(43) Date de publication de la demande: 13.04.2016
(73) Titulaire: Société BIC, 92110 Clichy (FR)
(72) Inventeur: BOISDEVESYS, David, 94200 Vitry sur Seine (FR); BEZ, Arnaud, 92380 Garches (FR); ROUDAUT, Etienne, 92250 La Garenne Colombes (FR)
(74) Mandataire: Milien, Jean-Baptiste Aurélien
(86) Numéro de dépôt international: PCT/FR2014/051255
(87) Numéro de publication internationale: WO 2014/191680

(56) Documents cités:
- WO-A1-2012/094633
- GB-A- 2 496 381
- US-A1- 2005 212 780
- US-A1- 2011 304 577
- US-A1- 2012 154 340
- US-A1- 2012 194 484
- US-A1- 2012 262 429

## Description

### DOMAINE DE L'INVENTION

L'invention concerne un dispositif manuel comprenant un embout pour écran capacitif. Un tel embout pour écran capacitif est capable d'interférer/interagir avec l'écran capacitif de sorte que sa présence en un point donné dudit écran capacitif est détectable par ce dernier. Par exemple, l'écran capacitif est un écran de tablette multimédia ou de téléphone portable.

### ETAT DE LA TECHNIQUE ANTERIEURE

Pour utiliser un écran capacitif, un stylet pour écran capacitif est souvent nécessaire. Néanmoins, un tel stylet est un instrument spécifique présentant une unique tête pour un écran capacitif prédéterminé, et est onéreux.

### PRESENTATION DE L'INVENTION

Le but de la présente invention est de remédier au moins substantiellement aux inconvénients mentionnés ci-avant.

L'invention atteint ce but en proposant un dispositif manuel comprenant un corps et au moins un embout inversable monté sur le corps, l'embout inversable comprenant une première tête et une deuxième tête opposée à la première tête, l'embout étant configuré pour être monté sur le corps dans une première position où la première tête fait saillie du corps tandis que la deuxième tête est escamotée à l'intérieur du corps ou dans une deuxième position dans laquelle la deuxième tête fait saillie du corps tandis que la première tête est escamotée à l'intérieure du corps, la première tête comprenant un premier coussinet pour écran capacitif. Avantageusement, le dispositif manuel forme un dispositif de bureau (ou article de bureau), comme par exemple un stylet, un stylo, un porte mine, ou équivalent.

On comprend que lorsque l'embout est monté sur le corps dans la première position, la première tête est utilisable tandis que lorsque l'embout est monté sur le corps dans la deuxième position c'est la deuxième tête qui est utilisable. Lorsqu'une tête est utilisable, l'autre tête est disposée dans le corps. En d'autres termes, le corps est au moins partiellement creux et configuré pour recevoir la première ou la deuxième tête respectivement dans la deuxième ou première position de l'embout. Ainsi, le corps permet de « ranger » une tête lorsque l'autre tête est utilisable. Le corps sert de protection de ladite tête ainsi rangée. Au sens de l'invention, le terme « corps » désigne de manière générale l'ensemble de tous les éléments qui ne font pas partie de l'embout.

On comprend que le coussinet (en anglais « pad ») est une terminaison configurée pour interagir avec un écran capacitif. Le coussinet est conducteur de courant électrique (grâce à son matériau de fabrication, ou grâce à un revêtement). La forme, la souplesse/rigidité et le/les matériaux d'un coussinet ne sont pas limités dans la mesure où ce coussinet est capable d'interagir avec un écran capacitif, c'est-à-dire que son contact avec un écran capacitif est détectable par ce dernier.

Le corps forme en tout ou partie une partie de préhension du dispositif manuel. L'embout est configuré pour que l'utilisateur puisse le monter sur le corps dans la première ou dans la deuxième position. Ainsi, on peut, selon son choix, monter l'embout sur le corps dans la première ou dans la deuxième position, et utiliser le dispositif manuel en le manipulant par le corps pour utiliser la tête faisant saillie du corps ainsi sélectionnée.

L'embout ayant deux têtes, la première tête comprenant un coussinet pour écran capacitif, on peut utiliser le dispositif manuel avec un écran capacitif avec la première tête, tandis que la deuxième tête permet d'utiliser le dispositif manuel par exemple dans d'autres circonstances (par exemple pour gommer, si la deuxième tête porte une gomme).

Ainsi, le dispositif manuel est plus polyvalent, ou moins spécifique, que les dispositifs connus de l'état de la technique. Un tel dispositif manuel forme un dispositif « deux en un », présentant deux « outils » en un seul dispositif. Le coût global d'un tel dispositif est moindre que le coût cumulé de deux dispositifs classiques distincts formant chacun un « outil » équivalent à une des têtes.

Avantageusement, la deuxième tête comprend un deuxième coussinet pour écran capacitif.

On comprend que le deuxième coussinet est distinct du premier coussinet. Préférentiellement, le deuxième coussinet est différent du premier coussinet. Par exemple les premier et deuxième coussinets sont différents par leurs tailles et/ou surfaces de contact avec un écran capacitif, et/ou formes, et/ou matériaux, et/ou rigidités, etc.

Le dispositif manuel présente ainsi deux coussinets distincts permettant d'utiliser des écrans capacitifs différents. La polyvalence du dispositif manuel pour utiliser les écrans capacitifs est ainsi accrue. Par exemple la surface de contact des premier et deuxième coussinets sont adaptées à des écrans capacitifs présentant différents degrés de précision. Ainsi, on utilise par exemple le coussinet présentant la plus grande surface de contact avec un écran capacitif de tablette multimédia, tandis qu'on utilise le coussinet présentant la plus petite surface de contact avec un écran capacitif de téléphone portable, l'écran d'une tablette multimédia étant généralement moins précis qu'un écran de téléphone portable.

Avantageusement, le premier coussinet est en contact électrique avec au moins une partie du corps lorsque l'embout est monté dans la première position.

Avantageusement, le deuxième coussinet est en contact électrique avec au moins une partie du corps lorsque l'embout est monté dans la deuxième position.

Par « au moins une partie du corps » on entend toute pièce du dispositif manuel ne faisant pas partie de l'embout. Par exemple, cette pièce est une pièce extérieure du dispositif manuel, par exemple une partie de préhension, ou une pièce intérieure du dispositif manuel.

Le contact électrique entre le premier/deuxième coussinet et le corps, ou une partie du corps, peut être direct ou indirect. Ainsi, selon une variante, le premier/deuxième coussinet contacte directement une partie du corps. Selon une autre variante, le premier/deuxième coussinet est en contact électrique avec le corps ou une partie de corps via une pièce intermédiaire.

Un tel contact électrique permet de s'assurer qu'un écran capacitif est sensible à la présence du premier/deuxième coussinet lorsque l'utilisateur manipule le dispositif manuel avec sa main et approche ledit coussinet de l'écran capacitif.

Avantageusement, le corps présente au moins une partie conductrice, le premier/deuxième coussinet étant en contact électrique avec au moins la partie conductrice du corps lorsque l'embout est monté dans la première/deuxième position.

Par la suite, et sauf indication contraire, par le terme « conducteur » ou « conductrice » on comprend « conducteur/conductrice de courant électrique ». Inversement, par la suite, et sauf indication contraire, par le terme « isolant » ou « isolante » on comprend « isolant/isolante vis-à-vis du courant électrique ».

Selon une variante, la partie conductrice est une partie de préhension du corps. Selon une autre variante, la partie conductrice est une partie interne du corps (i.e. qui n'est pas destinée à être directement maintenue par la main d'un utilisateur), par exemple une tige conductrice interne. Selon encore une autre variante, le corps présente une partie conductrice interne et une partie de préhension conductrice.

Avantageusement, l'embout comprend au moins un organe de contact (ou premier organe de contact) configuré pour former un contact électrique entre l'embout et au moins une partie du corps lorsque l'embout est monté dans la première position.

Avantageusement, l'embout comprend au moins un organe de contact (ou deuxième organe de contact) configuré pour former un contact électrique entre l'embout et au moins une partie du corps lorsque l'embout est monté dans la deuxième position.

Les premier et deuxième organes de contact peuvent former un seul et même organe, ou former deux organes distincts.

On comprend qu'un organe de contact est un élément qui permet de former un contact électrique entre l'embout et au moins une partie du corps. Selon une variante, un tel organe de contact forme une seule et même pièce avec l'embout. Selon une autre variante, un tel organe forme une pièce distincte de l'embout.

Grâce à un tel organe de contact on peut réaliser plus facilement une liaison électrique entre le premier/deuxième coussinet et au moins une partie corps lorsque l'embout est monté dans la première/deuxième position.

Avantageusement, l'embout comprend une douille conductrice dans laquelle est emmanchée la première tête et/ou la deuxième tête.

On comprend que la douille présente un logement interne recevant la première tête et/ou la deuxième tête. La douille étant conductrice, par exemple en métal, on peut facilement établir un contact électrique d'une part entre la première tête et/ou la deuxième tête et la douille, et d'autre part entre la douille et au moins une partie du corps.

Avantageusement, la douille s'étend selon une direction axiale, et une tête parmi la première tête et la deuxième tête coopère avec un premier épaulement délimitant axialement une première portion axiale de douille et une deuxième portion axiale de douille, ladite tête s'étendant dans la première portion axiale de douille en faisant saillie de la douille.

La douille présente, selon la direction axiale, une première portion et une deuxième portion. La première et la deuxième portion de la douille sont séparées par un premier épaulement. Une des deux têtes est montée par emmanchement dans la douille, et plus particulièrement dans la première portion axiale de douille, et coopère avec le premier épaulement, par exemple en butée ou en appui. Un tel montage permet de facilement établir un contact électrique entre ladite tête et la douille.

Avantageusement, ladite tête comprend une embase formant épaulement coopérant avec le premier épaulement de manière à établir un contact électrique entre ladite tête et la douille.

L'embase comprend la partie de ladite tête qui est configurée pour coopérer avec le premier épaulement. Par exemple, l'embase est conductrice et coopère en appui avec le premier épaulement. La douille étant également conductrice, le contact électrique est ainsi établi. Selon une variante, l'embase n'est pas conductrice mais présente au moins une partie de contact qui coopère avec le premier épaulement, ou une partie complémentaire de contact du premier épaulement. Selon une autre variante, l'embase est conductrice et présente au moins une partie de contact.

Avantageusement, l'embase est enserrée entre le premier épaulement et l'autre tête parmi la première tête et la deuxième tête.

L'embase comprend une partie de la première tête qui est prise en sandwich entre le premier épaulement et la deuxième tête. Un tel assemblage permet d'assurer un montage mécanique simple et efficace de la première tête avec la douille tout en assurant un contact électrique. Avantageusement, en verrouillant l'autre tête dans la douille, par exemple grâce à un emmanchement à force dans la douille, on verrouille le montage des deux têtes avec la douille.

Avantageusement, l'autre tête parmi la première tête et la deuxième tête comprend un support et un coussinet pour écran capacitif, ledit coussinet étant monté sur le support de manière à être en contact électrique avec la douille.

On comprend que le support et le coussinet forment deux pièces distinctes. Dans le cas où ladite autre tête est la première tête, alors ledit coussinet est le premier coussinet. Dans le cas où ladite autre tête est la deuxième tête, alors ledit coussinet est le deuxième coussinet. Le contact entre le coussinet et la douille peut être direct, le coussinet touchant physiquement la douille, ou indirect, par exemple par l'intermédiaire du support. Préférentiellement, le coussinet est en contact direct avec la douille. Ceci permet le limiter le nombre de contact entre pièces distinctes, ce qui diminue le risque de disfonctionnement.

Avantageusement, la douille comprend une jupe, le coussinet de ladite tête étant au moins en partie emmanché dans la jupe et en contact avec la jupe.

On comprend que le coussinet est emmanché dans la jupe tout en faisant saillie de la jupe pour pouvoir utiliser ledit coussinet. Le coussinet est en contact avec la douille via la jupe de la douille. Avantageusement, la jupe forme une seule et même pièce avec la douille. Selon une variante, au moins une partie du coussinet est enserrée entre la jupe et le support, grâce à quoi un contact direct entre la jupe et le coussinet est assuré.

Avantageusement, l'embout comprend au moins une saillie qui coopère en butée avec le corps dans la première et dans la deuxième position de l'embout.

Une telle saillie permet de s'assurer que l'embout reste en position lorsque l'on utilise le dispositif manuel. Notamment, la saillie permet d'éviter que l'embout ne se déplace par rapport au corps lorsqu'on appui sur la première ou la deuxième tête. Par ailleurs, selon une variante, la saillie permet également d'établir un contact électrique entre l'embout et au moins une partie du corps.

La même saillie coopérant avec le corps tant dans la première position que dans la deuxième position, elle permet de simplifier la structure de l'embout. Ceci permet d'optimiser les coûts de fabrication.

Avantageusement, le corps comprend une première partie de connecteur tandis que l'embout comprend une deuxième partie de connecteur (ou première deuxième partie de connecteur) coopérant avec la première partie de connecteur lorsque l'embout est monté dans la première position et une autre deuxième partie de connecteur (ou seconde deuxième partie de connecteur) coopérant avec la première partie de connecteur lorsque l'embout est monté dans la deuxième position.

On comprend donc que le connecteur pour monter l'embout sur le corps comprend une unique première partie solidaire du corps tandis qu'il comprend deux deuxièmes parties, de préférence identiques mais distinctes, permettant respectivement de monter l'embout dans la première et dans la deuxième position. Par exemple, la première partie et les deux deuxièmes parties forment des éléments complémentaires d'un mécanisme d'encliquetage (ou clipsage). L'encliquetage (ou clipsage) est un mode d'assemblage de deux parties par engagement et déformation élastique (en général déformation locale, par exemple d'une languette). Lorsque les deux parties sont engagées dans la position d'encliquetage, les parties ont généralement repris leur forme initiale et ne présente plus de déformation élastique (ou une déformation élastique moindre). Lorsque les deux parties sont engagées l'une avec l'autre dans la position d'encliquetage, elles coopèrent l'une avec l'autre de manière à s'opposer, voire bloquer, les mouvements relatifs desdites pièces dans le sens du dégagement (sens opposé au sens de l'engagement). En position d'encliquetage, les deux parties peuvent en outre coopérer de manière à s'opposer, voire bloquer, leurs mouvements relatifs dans le sens du prolongement de l'engagement, au-delà de la position d'encliquetage. Selon un autre exemple, la première partie et les deux deuxièmes parties forment des éléments complémentaires d'assemblage par vissage.

Avantageusement, le corps s'étend selon une direction axiale et présente une première extrémité distale sur laquelle l'embout est monté.

On comprend que lorsque l'embout comprend une douille s'étendant selon une direction axiale, la direction axiale du corps et la direction axiale de l'embout sont parallèles. Préférentiellement, le corps et la douille sont coaxiaux selon la direction axiale. Un corps longitudinal (i.e. s'étendant selon une direction axiale) présente une ergonomie avantageuse pour manipuler un embout pour écran capacitif.

Avantageusement, le corps présente une deuxième extrémité distale opposée à la première extrémité distale, la deuxième extrémité distale présentant une pointe d'écriture ou équivalent.

Par exemple, la pointe d'écriture ou équivalent est une pointe de stylo bille, une pointe de stylo feutre, une pointe de mine de crayon, une pointe rigide pour écran résistif, un pointe de poinçon, ou tout autre embout de dispositif manuel.

Ainsi, le dispositif manuel forme un dispositif « trois en un », la première extrémité portant l'embout inversable tandis que la deuxième extrémité présente la pointe d'écriture ou équivalent.

Selon encore un autre exemple, un autre embout inversable selon l'invention est monté sur la deuxième extrémité distale. Le dispositif manuel forme ainsi un dispositif « quatre en un ».

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un premier mode de réalisation d'un dispositif manuel vu en perspective, l'embout étant monté sur le corps dans une première position,
- la figure 2 représente le dispositif manuel de la figure 2, l'embout étant monté sur le corps dans une deuxième position,
- la figure 3 représente une vue détaillée de l'extrémité distale du dispositif manuel portant l'embout, l'embout étant déconnecté,
- la figure 4 représente la même vue que la figure 1 où l'embout est représenté en éclaté,
- la figure 5 représente la même vue que la figure 2 où l'embout est représenté en éclaté,
- la figure 6 représente une vue en coupe axiale partielle du dispositif manuel, l'embout étant monté dans la première position, et
- la figure 7 représente une vue en coupe axiale partielle du dispositif manuel, l'embout étant monté dans la deuxième position.

### DESCRIPTION DETAILLEE D'EXEMPLES DE REALISATION

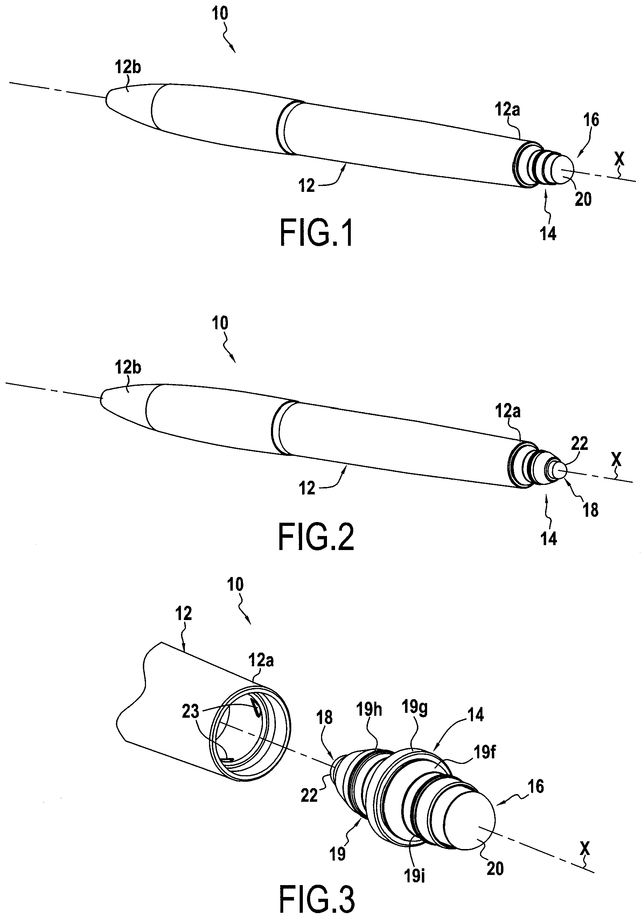

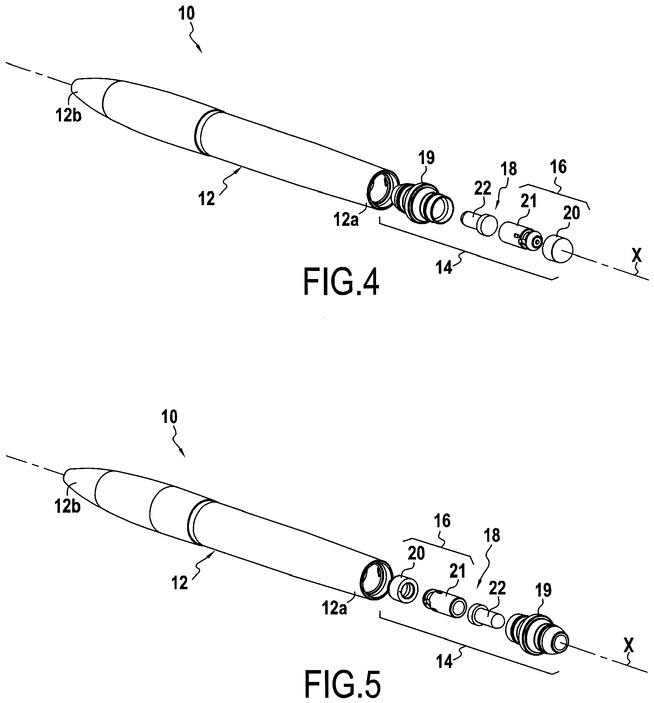

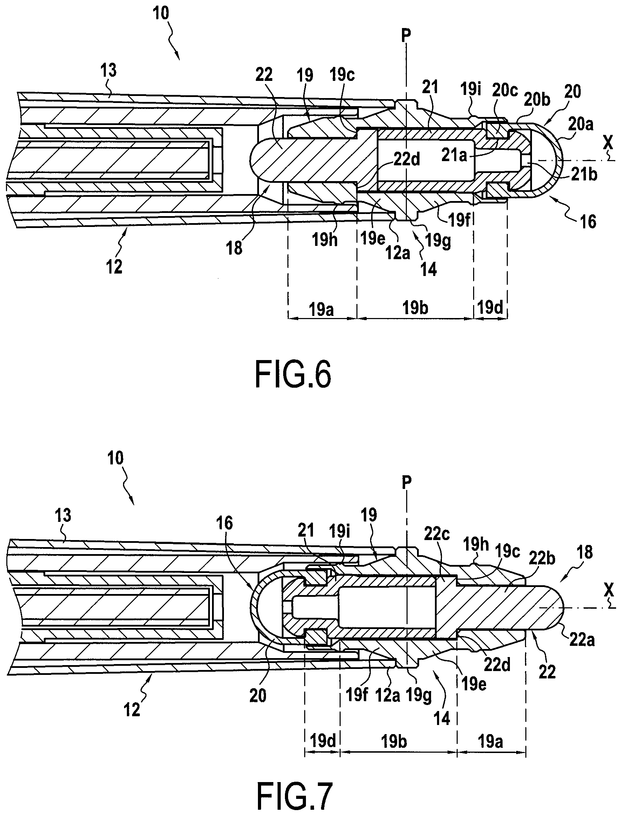

Un mode de réalisation d'un dispositif manuel est décrit en référence aux figures 1 à 7. Sur les figures 1 et 6 l'embout est monté dans la première position tandis que sur les figures 2 et 7 l'embout est monté dans la deuxième position. Cependant, la numérotation d'une position de montage de l'embout comme première ou deuxième position est tout-à-fait arbitraire. Ainsi, on pourrait considérer que les figures 1 et 6 représentent l'embout dans la deuxième position tandis que les figures 2 et 7 représentent l'embout dans la première position. Dans ce dernier cas, la numérotation des têtes, des coussinets, etc. serait également inversée par rapport à la description qui suit.

Le dispositif manuel 10 comprend un corps 12 s'étendant longitudinalement selon une direction axiale X, le corps 12 présentant une première extrémité distale 12a et une deuxième extrémité distale 12b opposée selon la direction axiale X à la première extrémité distale 12a.

La première extrémité distale 12a est équipée d'un embout inversable 14 tandis que la deuxième extrémité distale 12b est équipée d'une pointe d'écriture (non représentée), dans cet exemple une pointe de stylo bille. Bien entendu selon une variante, la pointe d'écriture peut être une pointe de porte mine, de feutre, ou équivalent.

L'embout inversable 14 s'étend longitudinalement selon la direction axiale X et comprend une première tête 16 et une deuxième tête 18 opposée selon la direction axiale X à la première tête 16. L'embout 14 comprend une douille 19 métallique, dans cet exemple en aluminium, dans laquelle la première tête 16 et la deuxième tête 18 sont emmanchées.

Dans la première position de l'embout 14, la première tête 16 fait saillie du corps 12 tandis que la deuxième tête 18 est escamotée dans le corps 12. Inversement, dans la deuxième position de l'embout 14, sur les figures 2, 5 et 7, la deuxième tête 18 fait saillie du corps 12 tandis que la première tête 16 est escamotée dans le corps 12.

La première tête 16 comprend un premier coussinet 20 pour écran capacitif tandis que la deuxième tête 18 comprend un deuxième coussinet 22 pour écran capacitif. Le premier coussinet 20 et le deuxième coussinet 22 sont en matériau conducteur, dans cet exemple en silicone chargé en noir de carbone. Selon une variante, la deuxième tête porte, par exemple, une gomme plutôt qu'un deuxième coussinet, ladite gomme pouvant présenter la même forme que le deuxième coussinet 22.

Le premier coussinet 20 est monté sur un support 21. Le premier coussinet 20 présente une extrémité distale 20a de coopération avec un écran capacitif, cette extrémité 20a présentant dans cet exemple une forme sensiblement hémisphérique creuse. L'extrémité 20a est disposée dans le prolongement d'une partie de fixation 20b de forme sensiblement cylindrique creuse. Cette partie de fixation 20b présente une collerette 20c disposée au voisinage de l'extrémité libre de la partie de fixation 20b, à l'intérieur de la partie de fixation 20b. Cette collerette 20c coopère par encliquetage avec une gorge annulaire 21a ménagée dans le support 21.

Le support 21 présente un trou traversant 21b selon la direction axiale X formant un évent pour équilibrer la pression interne du volume formée entre le premier coussinet 20 et le support 21 et la pression à l'extérieur dudit volume.

Le deuxième coussinet 22 présente une extrémité distale 22a de coopération avec un écran capacitif, cette extrémité 22a présentant dans cet exemple une forme sensiblement hémisphérique pleine. L'extrémité 22a est disposée dans le prolongement d'une partie de fixation 22b de forme sensiblement cylindrique pleine. Cette partie de fixation 22b s'étend axialement entre l'extrémité 22a et une embase 22c. L'embase 22c forme une collerette annulaire faisant radialement saillie vers l'extérieur par rapport à la partie de fixation 22b. La face de la collerette de l'embase 22c disposée du côté de la partie de fixation 22b forme un épaulement 22d.

La douille 19 s'étend selon la direction axiale X et présente dans cet exemple une symétrie de révolution autour de l'axe X. La douille 19 présente une première portion axiale de douille 19a et une deuxième portion axiale de douille 19b. Un premier épaulement 19c délimite axialement la première portion 19a et la deuxième portion 19b. Les première et deuxième portions axiales 19a et 19b sont adjacentes. Le diamètre interne de la première portion axiale 19a est inférieur au diamètre interne de la deuxième portion axiale 19b. A l'opposé de la première portion axiale 19a selon la direction axiale X, la douille 19 présente une jupe 19d adjacente à la deuxième portion axiale 19b. Ainsi, selon la direction axiale X, la douille présente successivement la première portion axiale 19a, la deuxième portion axiale 19b et la jupe 19d. Le diamètre interne de la deuxième portion 19b est inférieur au diamètre interne de la jupe 19d.

La deuxième tête 18 s'étend dans la première portion axiale de douille 19a et coopère axialement avec le premier épaulement 19c. La deuxième tête 18 fait saillie de la première portion axiale de douille 19a. Notamment, dans cet exemple, l'embase 22c, et plus particulièrement l'épaulement 22d coopère axialement avec le premier épaulement 19c de la douille 19. Le deuxième coussinet 22, et plus particulièrement la partie de fixation 22b s'étend axialement dans la première portion axiale 19a tandis que l'extrémité distale 22a du deuxième coussinet 22 fait saillie de la première portion axiale 19a, et donc de la douille 19.

Le support 21 est emmanché à force dans la deuxième portion axiale 19b de la douille 19 et enserre l'embase 22c et maintien ladite embase 22c en appui contre le premier épaulement 19c. Le deuxième coussinet 22 et la douille 19 étant en matériaux conducteurs, grâce à ce montage il y a contact électrique entre la douille 19 et le deuxième coussinet 22 au moins par la coopération en appui entre l'épaulement 22d et le premier épaulement 19c.

Le premier coussinet 20 est fixé sur le support 21 par l'intermédiaire de la collerette 20c engagée dans la gorge 21a. La portion du support 21 présentant cette gorge 21a s'étend dans la jupe 19d de la douille 19 de manière à ce que la partie de fixation 20b du premier coussinet 20 soit enserrée axialement entre le support 21 et la jupe 19d. Ainsi, la collerette 20c est bloquée à l'intérieure de la gorge 21a, ce qui verrouille le montage du premier coussinet 20 sur le support 21. Bien entendu, l'extrémité distale 20a du premier coussinet fait saillie axialement de la jupe 19c, et donc de la douille 19.

La jupe 19d est en contact avec la partie de fixation 20b du premier coussinet 20. La douille 19 et le premier coussinet 20 étant conducteurs, grâce à ce montage il y a contact électrique entre la douille 19 et le premier coussinet 20.

Dans cet exemple, le support 21 est en matériau isolant. Selon une variante, ce support 21 est en matériau conducteur et participe également au contact électrique entre le premier coussinet 20 et la douille 19, bien que ce ne soit pas sa fonction principale.

La douille 19 présente sur sa périphérie extérieure des organes de contact 19e et 19f configurés pour former un contact électrique entre l'embout 19 et le corps 12, dans cet exemple avec la partie de préhension 13 du corps 12. Les organes de contact 19e et 19f forment une seule et même pièce avec la douille 19 et sont conducteurs, en métal, et plus particulièrement en aluminium. La douille 19 et les organes de contact 19e et 19f forment donc une pièce monobloc fabriquée dans un seul et même matériau. La partie de préhension 13 est conductrice, dans cet exemple en métal, et plus particulièrement en aluminium.

Plus particulièrement, l'organe de contact 19e est configuré pour former un contact électrique entre la partie de préhension et l'embout 14 lorsque l'embout est monté dans la première position. L'organe de contact 19f est configuré pour former un contact électrique entre la partie de préhension et l'embout 14 lorsque l'embout est monté dans la deuxième position. Dans cet exemple, les organes de contact 19e et 19f sont symétriques par rapport à un plan radial P de l'embout 14. Dans cet exemple les organes de contact 19e et 19f sont de forme tronconique s'évasant respectivement vers la première tête 16 et vers la deuxième tête 18. Le plus grand diamètre de chacune de ces formes tronconiques est sensiblement égal au diamètre intérieur de la partie de préhension 13. Ainsi, lorsque l'embout 14 est dans la première position l'organe de contact 19e est en contact électrique avec la partie de préhension 13 tandis que lorsque l'embout 14 est dans la deuxième position l'organe de contact 19f est en contact électrique avec la partie de préhension 13.

Ainsi, grâce au montage des coussinets 20 et 22 sur la douille 19, les coussinets 20 et 22 sont en contact électrique avec la douille 19 tandis que la douille 19 est en contact électrique avec au moins une partie du corps 12, à savoir avec la partie de préhension 13. Par conséquent, dans la première position de l'embout 14, le premier coussinet 16 est en contact électrique avec la partie de préhension 13 tandis que dans la deuxième position de l'embout 14, le deuxième coussinet 18 est en contact électrique avec la partie de préhension 13. Dans cet exemple la douille 19 et les organes de contact 19e et 19f formant une seule et même pièce monobloc dans un seul matériau conducteur, les deux coussinets 20 et 22 sont en contact électrique avec la partie de préhension quelle que soit la position de l'embout.

On notera que la forme tronconique des organes de contact 19e et 19f permet également de faciliter l'insertion et le guidage de l'embout 14 lorsqu'on l'assemble au corps 12.

Par ailleurs, les organes de contact 19e et 19f sont séparés axialement par une collerette d'arrêt 19g faisant saillie radialement vers l'extérieur de l'embout 14. Cette collerette d'arrêt 19g coopère en butée avec le corps 12, et plus particulièrement avec la partie de préhension 13, dans la première et dans la deuxième position de l'embout 14. Cette collerette d'arrêt 19g permet de limiter l'enfoncement de l'embout 14 dans le corps 12 pour éviter toute détérioration. Par ailleurs, cette collerette 19g forme une seule et même pièce avec la douille 19, et est donc également conductrice. Ainsi, cette collerette d'arrêt 19g participe également au contact électrique entre la douille 19 et la partie de préhension 13.

La douille 19 présente sur sa périphérie extérieure des reliefs annulaires d'encliquetage 19h et 19i coopérant avec les reliefs complémentaires 23 du corps 12 (cf. fig. 3) lorsque l'embout 14 est monté dans la première position ou dans la deuxième position. Les reliefs annulaires d'encliquetage 19h et 19i forment une seule et même pièce avec la douille 19. Ainsi, les reliefs complémentaires 23 forment une première partie de connecteur tandis que le relief annulaire 19h forme une deuxième partie de connecteur coopérant les reliefs 23 lorsque l'embout est monté dans la première position et que le relief annulaire 19i forme une autre deuxième partie de connecteur coopérant avec les reliefs 23 lorsque l'embout est monté dans la deuxième position. Ainsi, grâce au montage de l'embout 14 sur le corps 12 par encliquetage, l'utilisateur peut aisément démonter l'embout 14 du corps 12, et le remonter tout aussi facilement dans la position désirée.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Notamment, la structure de la première tête est transposable à la deuxième tête tandis que la structure de la deuxième tête est transposable à la première tête.

## Revendications

1. Dispositif manuel (10) comprenant un corps (12), ledit dispositif étant **caractérisé en ce qu'**il comprend au moins un embout inversable (14) monté sur le corps (12), l'embout inversable (14) comprenant une première tête (16) et une deuxième tête (18) opposée à la première tête (16), l'embout (14) étant configuré pour être monté sur le corps (12) dans une première position où la première tête (16) fait saillie du corps (12) tandis que la deuxième tête (18) est escamotée à l'intérieur du corps (12) ou dans une deuxième position dans laquelle la deuxième tête (18) fait saillie du corps (12) tandis que la première tête (16) est escamotée à l'intérieure du corps (12), et **en ce que** la première tête (16) comprend un premier coussinet (20) pour écran capacitif.

2. Dispositif (10) selon la revendication 1, dans lequel la deuxième tête (18) comprend un deuxième coussinet (22) pour écran capacitif.

3. Dispositif (10) selon la revendication 2, dans lequel le premier coussinet (20) est différent du deuxième coussinet (22).

4. Dispositif (10) selon l'une quelconque des revendications 1 à 3, dans lequel le premier coussinet (20) est en contact électrique avec au moins une partie du corps (12) lorsque l'embout est monté dans la première position.

5. Dispositif (10) selon la revendication 2 et l'une quelconque des revendications 1 à 4, dans lequel le deuxième coussinet (22) est en contact électrique avec au moins une partie du corps (12) lorsque l'embout est monté dans la deuxième position.

6. Dispositif (10) selon l'une quelconque des revendications 1 à 5, dans lequel l'embout (14) comprend au moins un organe de contact (19e) configuré pour former un contact électrique entre l'embout (14) et au moins une partie du corps (12) lorsque l'embout (14) est monté dans la première position.

7. Dispositif (10) selon la revendication 2 et l'une quelconque des revendications 1 à 6, dans lequel l'embout (14) comprend au moins un organe de contact (19f) configuré pour former un contact électrique entre l'embout (14) et au moins une partie du corps (12) lorsque l'embout est monté dans la deuxième position.

8. Dispositif (10) selon l'une quelconque des revendications 1 à 7, dans lequel l'embout (14) comprend une douille conductrice (19) dans laquelle est emmanchée la première tête (16) et/ou la deuxième tête (18).

9. Dispositif (10) selon la revendication 8 dans lequel la douille (19) s'étend selon une direction axiale (X), et dans lequel une tête parmi la première tête (16) et la deuxième tête (18) coopère avec un premier épaulement (19c) délimitant axialement une première portion axiale de douille (19a) et une deuxième portion axiale de douille (19b), ladite tête s'étendant dans la première portion axiale de douille (19a) en faisant saillie de la douille (19).

10. Dispositif (10) selon la revendication 9, dans lequel ladite tête comprend une embase (22c) formant épaulement (22d) coopérant avec le premier épaulement (19c) de manière à établir un contact électrique entre ladite tête et la douille (19).

11. Dispositif (10) selon la revendication 10, dans lequel l'embase (22c) est enserrée entre le premier épaulement (19c) et l'autre tête parmi la première tête (16) et la deuxième tête (18).

12. Dispositif (10) selon l'une quelconque des revendications 9 à 11, dans lequel l'autre tête parmi la première tête (16) et la deuxième tête (18) comprend un support (21) et un coussinet (20) pour écran capacitif, ledit coussinet (20) étant monté sur le support (21) de manière à être en contact électrique avec la douille (19).

13. Dispositif (10) selon la revendication 12, dans lequel la douille (19) comprend une jupe (19d), le coussinet (20) de ladite autre tête étant au moins en partie emmanché dans la jupe (19d) et en contact avec la jupe (19d).

14. Dispositif (10) selon l'une quelconque des revendications 1 à 13, dans lequel le corps (12) s'étend selon une direction axiale (X) et présente une première extrémité distale (12a) sur laquelle l'embout (14) est monté.

15. Dispositif (10) selon la revendication 14, dans lequel le corps (12) présente une deuxième extrémité distale (12b) opposée à la première extrémité distale (12a), la deuxième extrémité distale (12b) présentant une pointe d'écriture ou équivalent.

## Patentansprüche

1. Manuelle Vorrichtung (10), umfassend einen Körper (12), wobei die Vorrichtung **dadurch gekennzeichnet ist, dass** sie mindestens einen umkehrbaren Ansatz (14) umfasst, der auf dem Körper (12) montiert ist, wobei der umkehrbare Ansatz (14) einen ersten Kopf (16) und einen zweiten Kopf (18), der zum ersten Kopf (16) entgegengesetzt angeordnet ist, umfasst, wobei der Ansatz (14) dazu vorgesehen ist, auf dem Körper (12) in einer ersten Position, in der der erste Kopf (16) aus dem Körper (12) herausragt, während der zweite Kopf (18) in das Innere des Körpers (12) eingezogen ist, oder in einer zweiten Position montiert zu werden, in der der zweite Kopf (18) aus dem Körper (12) herausragt, während der erste Kopf (16) in das Innere des Körpers (12) eingezogen ist, montiert zu werden, und dass der erste Kopf (16) eine Aufnahme (20) für einen kapazitiven Schirm umfasst.

2. Vorrichtung (10) gemäß Anspruch 1, bei der der zweite Kopf (18) eine zweite Aufnahme (22) für einen kapazitiven Schirm umfasst.

3. Vorrichtung (10) gemäß Anspruch 2, bei der die erste Auflage (20) zu der zweiten Auflage (22) unterschiedlich ist.

4. Vorrichtung (10) gemäß einem der Ansprüche 1 bis 3, bei der die erste Aufnahme (20) in elektrischem Kontakt mit mindestens einem Teil des Körpers (12) ist, wenn der Ansatz in der ersten Position montiert ist.

5. Vorrichtung (10) gemäß Anspruch 2 und einem der Ansprüche 1 bis 4, bei der die zweite Aufnahme (22) in elektrischem Kontakt mit mindestens einem Teil des Körpers (12) ist, wenn der Ansatz in der zweiten Position montiert ist.

6. Vorrichtung (10) gemäß einem der Ansprüche 1 bis 5, bei der der Ansatz (14) mindestens ein Kontaktelement (19e) umfasst, das dazu vorgesehen ist, einen elektrischen Kontakt zwischen dem Ansatz (14) und mindestens einem Teil des Körpers (12) zu bilden, wenn der Ansatz (14) in der ersten Position montiert ist.

7. Vorrichtung (10) gemäß Anspruch 2 und einem der Ansprüche 1 bis 6, bei der der Ansatz (14) mindestens ein Kontaktelement (19f) umfasst, das dazu vorgesehen ist, einen elektrischen Kontakt zwischen dem Ansatz (14) und mindestens einem Teil des Körpers (12) zu bilden, wenn der Ansatz in der zweiten Position montiert ist.

8. Vorrichtung (10) gemäß einem der Ansprüche 1 bis 7, bei der der Ansatz (14) eine leitende Büchse (19) umfasst, in die der erste Kopf (16) und/oder der zweite Kopf (18) eingesteckt ist.

9. Vorrichtung (10) gemäß Anspruch 8, bei der sich die Büchse (19) in eine Axialrichtung (X) erstreckt, und bei der ein Kopf unter dem ersten Kopf (16) und dem weiten Kopf (18) mit einem ersten Absatz (19c) zusammenwirkt, der axial einen ersten Axialabschnitt der Buchse (19a) und einen zweiten Axialabschnitt der Büchse (19b) begrenzt, wobei sich der Kopf in dem ersten Axialabschnitt der Büchse (19a) erstreckt, wobei er aus der Büchse (19) herausragt.

10. Vorrichtung (10) gemäß Anspruch 9, bei der der Kopf einen Sockel (22c) umfasst, der einen Absatz (22d) bildet, der mit dem ersten Absatz (19c) zusammenwirkt, um einen elektrischen Kontakt zwischen dem Kopf und der Büchse (19) herzustellen.

11. Vorrichtung (10) gemäß Anspruch 10, bei der der Sockel (22c) zwischen dem ersten Absatz (19c) und dem anderen Kopf unter dem ersten Kopf (16) und dem zweiten Kopf (18) eingespannt ist.

12. Vorrichtung (10) gemäß einem der Ansprüche 9 bis 11, bei der der andere Kopf unter dem ersten Kopf (16) und dem zweiten Kopf (18) einen Träger (21) und eine Aufnahme (20) für einen kapazitiven Schirm umfasst, wobei die Aufnahme (20) auf dem Träger (21) derart montiert ist, dass sie mit der Büchse (19) in elektrischem Kontakt ist.

13. Vorrichtung (10) gemäß Anspruch 12, bei der die Büchse (19) eine Schürze (19d) umfasst, wobei die Auflage (20) des anderen Kopfes mindestens teilweise in die Schürze (19d) eingesteckt und mit der Schürze (19d) in Kontakt ist.

14. Vorrichtung (10) gemäß einem der Ansprüche 1 bis 13, bei der sich der Körper (12) in eine Axialrichtung (X) erstreckt und ein erstes distales Ende (12a) aufweist, auf dem der Ansatz (14) montiert ist.

15. Vorrichtung (10) gemäß Anspruch 14, bei der der Körper (12) ein zweites distales Ende (12b) umfasst, das zum ersten distalen Ende (12a) entgegengesetzt angeordnet ist, wobei das zweite distale Ende (12b) eine Schreibspitze oder dergleichen aufweist.

## Claims

1. A manual device (10) comprising a body (12), said device being **characterized in that** it comprises at least one reversible tip (14) mounted on the body (12), the reversible tip (14) comprising a first head (16) and a second head (18) opposite to the first head (16), the tip (14) being configured to be mounted on the body (12) in a first position in which the first head (16) projects from the body (12) while the second head (18) is stored inside the body (12) or in a second position in which the second head (18) projects from the body (12) while the first head (16) is stored inside the body (12), and **in that** the first head (16) comprises a first pad (20) for a capacitive screen.

2. A device (10) according to claim 1, wherein the second head (18) comprises a second pad (22) for a capacitive screen.

3. A device (10) according to claim 2, wherein the first pad (20) is different from the second pad (22).

4. A device (10) according to any one of claims 1 to 3, wherein the first pad (20) is in electrical contact with at least a portion of the body (12) when the tip is mounted in the first position.

5. A device (10) according to claim 2 and to any one of claims 1 to 4, wherein the second pad (22) is in electrical contact with at least a portion of the body (12) when the tip is mounted in the second position.

6. A device (10) according to any one of claims 1 to 5, wherein the tip (14) comprises at least one contact member (19e) configured to form an electrical contact between the tip (14) and at least a portion of the body (12) when the tip (14) is mounted in the first position.

7. A device (10) according to claim 2 and any one of claims 1 to 6, wherein the tip (14) comprises at least one contact member (19f) configured to form an electrical contact between the tip (14) and at least a portion of the body (12) when the tip is mounted in the second position.

8. A device (10) according to any one of claims 1 to 7, wherein the tip (14) comprises at least a conductive casing (19) in which the first head (16) and/or the second head (18) is/are fitted.

9. A device (10) according to claim 8, wherein the casing (19) extends in an axial direction (X), and in which a head selected from the first head (16) and the second head (18) co-operates with a first shoulder (19c) axially defining a first axial casing portion (19a) and a second axial casing portion (19b), said head extending in the first axial casing portion (19a) by projecting from the casing (19).

10. A device (10) according to claim 9, wherein said head includes a base (22c) forming a shoulder (22d) cooperating with the first shoulder (19c) in such a manner as to establish electrical contact between said head and the casing (19).

11. A device (10) according to claim 10, wherein the base (22c) is blocked between the first shoulder (19c) and the other head selected from the first head (16) and the second head (18).

12. A device (10) according to any one of claims 9 to 11, wherein the other head selected from the first head (16) and the second head (18) includes a support (21) and a pad (20) for a capacitive screen, said pad (20) being mounted on the support (21) in such a manner as to be in electrical contact with the casing (19).

13. A device (10) according to claim 12, wherein the casing (19) comprises a skirt (19d), the pad (20) of said other head being at least in part fitted in the skirt (19d) and in contact with the skirt (19d).

14. A device (10) according to any one of claims 1 to 13, wherein the body (12) extends in an axial direction (X) and presents a first distal end (12a) on which the tip (14) is mounted.

15. A device (10) according to claim 14, wherein the body (12) presents a second distal end (12b) opposite to the first distal end (12a), the second distal end (12b) presenting a writing tip or the equivalent.
